# EUROPÄISCHE PATENTSCHRIFT

(11) **EP 0 665 396 B1**
(45) Veröffentlichungstag und Bekanntmachung des Hinweises auf die Patenterteilung: **07.01.1998**
(21) Anmeldenummer: 94116214.1
(22) Anmeldetag: 14.10.1994
(51) Int. Cl.: F16K 31/124

(54) **Pneumatisch angesteuertes Gassicherheitsventil mit autonomer Druckluftversorgung**
Pneumatically controlled valve with independent air pressure supply
Soupape à commande pneumatique avec alimentation indépendante d'air comprimé

(30) Priorität: 29.01.1994 DE 4402647
(43) Veröffentlichungstag der Anmeldung: 02.08.1995
(73) Patentinhaber: KARL DUNGS GMBH & CO., D-73660 Urbach (DE)
(72) Erfinder: Neu, Kunibert Dr., 73117 Wangen (DE)
(74) Vertreter: KOHLER SCHMID + PARTNER

(56) Entgegenhaltungen:
- EP-A- 0 040 732
- DE-A- 1 917 101
- DE-A- 2 702 741
- DE-A- 3 129 110
- DE-A- 3 129 125

## Beschreibung

Die Erfindung betrifft ein Ventil, das mittels eines Ventiltellers einen Strömungskanal öffnet bzw. verschließt, mit einem mit dem Ventilteller verbundenen Kolben, der zum Öffnen oder Schließen in Längsrichtung in einem Arbeitsraum mit Druckluft beaufschlagbar ist, wobei ein die Druckluft erzeugender Kompressor in dem Ventil ausgebildet ist.

Ein derartiges Ventil ist bekannt aus der DE-A-19 17 101.

In der deutschen Offenlegungsschrift ist ein elektrischer Stellantrieb zur Betätigung von Ventilen, Schiebern, Drosselklappen und ähnlichem beschrieben, der mit Hilfe eines kleinen, elektromotorisch angetriebenen Kompressors pneumatisch angetrieben wird. Die bekannte Vorrichtung eignet sich jedoch nicht als Sicherheitsventil zum schnellen Schalten von Fluidströmen, da konstruktionsbedingt nur eine langsame Ventilbetätigung möglich ist, so daß eine schnelle Reaktion auf eine Änderung der Situation in der mit dem Ventil gesteuerten Strömungsstrecke nicht möglich ist.

Derartige Sicherheitsventile sind beispielsweise aus dem Artikel "Sicherheitsventile mit Druckluftsteuerung für Dampfkraftanlagen" von H.E. Marks in der Zeitschrift "Energie und Technik", September 1962, S. 332-334 bekannt. Sie dienen als Absperrventile in der chemischen Industrie der Verfahrenstechnik und der Kraftwerkstechnik im Hochdruckbereich bei Drücken von mehreren hundert bar, bei denen große Öffnungs- oder Schließkräfte gefordert sind. Auch bei explosivgeschützten Anwendungen wird Preßluft als Energieträger verwendet.

Gegenüber ölhydraulisch bewegten Kolben mit Gleitdichtungen oder Rollmembranen als Dichtungen, wie sie beispielsweise aus der DE-A-27 02 741 oder der EP-A-0 040 732 bekannt sind, hat die Preßluft den Vorteil, die Atmosphäre als Rückleitung zu benutzen, und ist je nach Ölgehalt ein fast sauberes Medium.

Weiterhin gibt es seit Jahren neben den elektromagnetisch angetriebenen Gassicherheitsventilen hydraulischbetriebene Sicherheitsventile und solche, die mit Preßluft-Zylindern betätigt werden.

Bei mit Preßluft arbeitenden Sicherheitsventilen ist es von Nachteil, daß die Preßluft nicht immer zur Verfügung steht und zudem ein teures Medium darstellt, da es in der üblichen Druckstufe zwischen 6 und 10 bar im vorgesehenen Anwendungsbereich viel zu hoch vorgespannt ist. Außerdem ist das Heranführen von Leitungen und einer Druckminderstation bei der Kostenbetrachtung mit einzubeziehen.

Der vorliegenden Erfindung liegt daher die Aufgabe zugrunde, ein Ventil der eingangs genannten Art dahingehend weiterzubilden, daß es einerseits auch ohne von außen bereitzustellende Preßluft dennoch als druckluftbetriebenes Ventil betrieben werden kann, wobei es andererseits den Anforderungen an die Reaktionsschnelligkeit und Betriebssicherheit genügt, wie sie bei Ventilen zur Steuerung von Gasbefeuerungsanlagen unerläßlich sind.

Diese Aufgabe wird erfindungsgemäß dadurch gelöst, daß das Ventil als Sicherheitsventil ausgebildet ist, wobei die von dem Kompressor erzeugte Druckluft in einem dem Arbeitsraum vorgeschalteten Druckbehälter speicherbar und bei Bedarf abrufbar ist, so daß die Stellzeit des Sicherheitsventils nicht durch einen erst noch zu schaffenden Druckaufbau verlängert wird, daß ein den Druckbehälter mit dem Arbeitsraum verbindender Überströmkanal mittels eines Magnetventils in dessen erster Arbeitsstellung öffnenbar und in dessen zweiter Arbeitsstellung verschließbar ist, wobei dem stromlosen Zustand des Magnetventils seine zweite Arbeitsstellung zugeordnet ist, und daß der Überströmkanal in der zweiten Arbeitsstellung des Magnetventils über eine Ausblaseöffnung zur Umgebungsatmosphäre geöffnet ist.

Das erfindungsgemäße Sicherheitsventil hat damit den großen Vorteil, daß im Aufstellungsnahbereich des Sicherheitsventils keine Preßluft mit entsprechenden Anschlüssen und Leitungen erforderlich ist. Durch entsprechende Wahl der Kompressorleistung kann der Druckluftbedarf individuell angepaßt werden. Druckminderer, wie sie bei den Sicherheitsventilen gemäß dem Stand der Technik erforderlich sind, werden nicht benötigt.

Die Trennung von Druckbehälter und Arbeitsraum mittels des Magnetventils hat den Vorteil, daß der für das Öffnen des Sicherheitsventils notwendige Druckaufbau im Druckbehälter über ein leistungsarmes Magnetventil abgerufen werden kann.

Die sich im Arbeitsraum befindliche komprimierte Luft kann über die Ausblaseöffnung nach außen entweichen. Die Öffnungsquerschnitte des Überströmkanals und der Ausblaseöffnung sind dabei so dimensioniert, daß der Überdruck im Arbeitsraum innerhalb weniger Zehntelsekunden soweit abgebaut ist, daß dem Rückstellen des Steuerkolbens bzw. des Ventiltellers in seine geschlossene Stellung nur eine geringe Dämpfungskraft entgegengesetzt wird. Dem stromlosen Zustand des Magnetventils ist dabei seine zweite Arbeitsstellung zugeordnet, damit bei einem Stromausfall das Schließen des Sicherheitsventils gewährleistet ist. Wenn der Kompressor und das Magnetventil auf der gleichen Seite des Sicherheitsventils angeordnet sind, läßt sich das Sicherheitsventil besonders klein dimensionieren.

Vorteilhafterweise ist der Kompressor als Kleinstkompressor, vorzugsweise als eine Membranpumpe, ausgebildet. Ein derartiger Kleinstkompressor schafft beispielsweise über einen vorgeschalteten Druckbehälter den zum Öffnen des Sicherheitsventils notwendigen Druckaufbau in weniger als einer Sekunde. Ein solches Sicherheitsventil ist lediglich an eine Strom- bzw. Spannungsquelle anzuschließen, wie dies auch für jedes Magnetventil der Fall ist. Dabei ist lediglich darauf zu achten, daß die Membranpumpe ca. 10-20 Sekunden vor dem Öffnen des Sicherheitsventils den dazu erforderlichen Druck aufbauen kann. Hierfür steht beispielsweise bei einem Sicherheitsventil für einen normalen Gebläsebrenner immer eine ausreichend lange Zeit, nämlich eine Vorbelüftungszeit von etwa 30 Sekunden zur Verfügung. Durch den Kleinstkompressor wird weiterhin die Dimension des Sicherheitsventils nur geringfügig erhöht.

Der Vorteil dieses Antriebes mit Druckluft liegt außerdem in der robusten und einfachen Bauweise sowie in dem gegenüber einem Sicherheitsventil mit Magnetantrieb wesentlich verringerten Energieverbrauch. Der Luftantrieb ist der umweltschonenste Antrieb schlechthin, wenn von der Möglichkeit, das von dem Sicherheitsventil zu regelnde Fluid selbst als Antriebsenergie zu nehmen, abgesehen wird. Ein weiterer wesentlicher Vorteil liegt darin, daß der Öffnungsschlag minimiert wird, der bei großen Magnetventilen immer als störend empfunden wird.

In einer weiteren bevorzugten Ausführungsform weist der Kompressor eine dem Druckbehälter vorgeschaltete kleinere Druckkammer auf, die über ein erstes Klappenventil mit einem Luftansaugkanal und über ein zweites Klappenventil mit dem Druckbehälter verbindbar ist. Der Kompressor kann dann besonders klein ausgebildet sein, weil nur ein geringes Kammervolumen zu komprimieren ist.

Bevorzugt unterteilt eine mit dem Kolben verbundene Dichtungsmembran den Hubraum des Kolbens in den Arbeitsraum und einen Stauraum abdichtend. Eine aufwendige Abdichtung zwischen dem Kolbenteller des Kolbens und der Gehäusewand ist somit nicht erforderlich.

Besonders vorteilhaft ist es, wenn der Stauraum über eine Atmungsöffnung mit der Umgebungsatmosphäre verbunden ist. Beim Öffnungsvorgang des Sicherheitsventils kann die durch den Hub des Kolben unterhalb seiner Arbeitsfläche im Stauraum befindliche Luft über die Atmungsöffnung entweichen, so daß der Öffnungsbewegung des Kolbens keine Dämpfungskraft entgegengesetzt wird. Beim Schließvorgang des Sicherheitsventils kann über die Atmungsöffnung Luft von außen in das sich expandierende Volumen des Stauraumes einfließen, so daß die Schließbewegung nicht durch eine Druckdifferenz zwischen Arbeitsraum und Stauraum verzögert wird.

In einer besonders vorteilhaften Ausführungsform der Erfindung ist im Druckbehälter ein den Betrieb des Kompressor regelnder Druckmeßfühler angeordnet. Ist im Druckbehälter ein bestimmter Druck erreicht, so wird der Kompressor über den Drucksensor im Druckbehälter abgeschaltet. Erst wenn ein gewisser Druckabfall im Druckbehälter aufgetreten ist, wird der Kompressor über den Druckmeßfühler wieder eingeschaltet, bis der definierte Druck im Druckbehälter wieder erreicht ist. Ein solcher Druckabfall im Druckbehälter tritt nur dann auf, wenn der Druckbehälter über den Überströmkanal mit dem Arbeitsraum verbunden wird bzw. wenn im Druckbehälter eine Leckage auftritt. Bei guter Abdichtung des Sicherheitsventils und geringem Schalten des Sicherheitsventils wird der Betrieb des Kompressors wesentlich verringert.

Ganz besonders bevorzugt ist der Ventilteller mit einer in seine Schließrichtung wirkenden Schließfeder beaufschlagt. Die Schließfeder stellt die Rückstellkraft für den Schließvorgang des Ventiltellers bereit und bringt die erforderliche Anpreßkraft auf den Ventilsitz in Geschlossenstellung auf.

Weiterhin bevorzugt ist im Bereich des Ventiltellers ein dessen Stellweg messender Meßfühler angeordnet, der insbesondere als ein die völlige Offenstellung des Ventiltellers feststellender Endkontakt ausgebildet ist. Bei völlig geöffnetem Ventilteller wird über den Meßfühler der Endkontakt umgeschaltet, wobei hierfür ein Hub von etwa 1 mm ausreichend ist. Der Endkontakt übernimmt somit die Lagesteuerung des Ventiltellers. Sobald dieser Endkontakt verlassen wird, z. B. weil durch Leckage ein Druckabfall im Arbeitsraum stattgefunden hat, wird der Kompressor eingeschaltet, der über einen Druckaufbau im Arbeitsraum den Ventilteller wieder in seine maximale Öffnungsstellung bringt.

Die Erfindung ist nicht auf die beschriebene Ausführungsform eines proportional angesteuerten Zusatzventiles und einer Ventilteller-Lagemessung beschränkt und kann jederzeit in ein modulierendes Ventil umgewandelt werden. Außerdem ist dieses an einem Einweg-Sicherheitsventil gezeigte erfindungsgemäße Prinzip genauso an einem Doppelwege-Ventil einsetzbar. Hier können mit einem Kompressor zwei Druckbehälter vorgespannt werden und unabhängig voneinander zwei Ventile nacheinander oder gemeinsam geöffnet werden.

Weitere Vorteile ergeben sich aus der Beschreibung und der beigefügten Zeichnung. Die erwähnten Ausführungsformen sind nicht als abschließende Aufzählung zu verstehen, sondern haben vielmehr beispielhaften Charakter.

Die Erfindung ist in zwei Ausführungsbeispielen in der Zeichnung dargestellt und wird in der nachfolgenden Beschreibung näher erläutert. Es zeigen:
- Fig. 1: einen Querschnitt durch ein erstes Ausführungsbeispiel eines erfindungsgemäßen Sicherheitsventils und
- Fig. 2: einen der Fig. 1 entsprechenden Querschnitt durch ein zweites Ausführungsbeispiel.

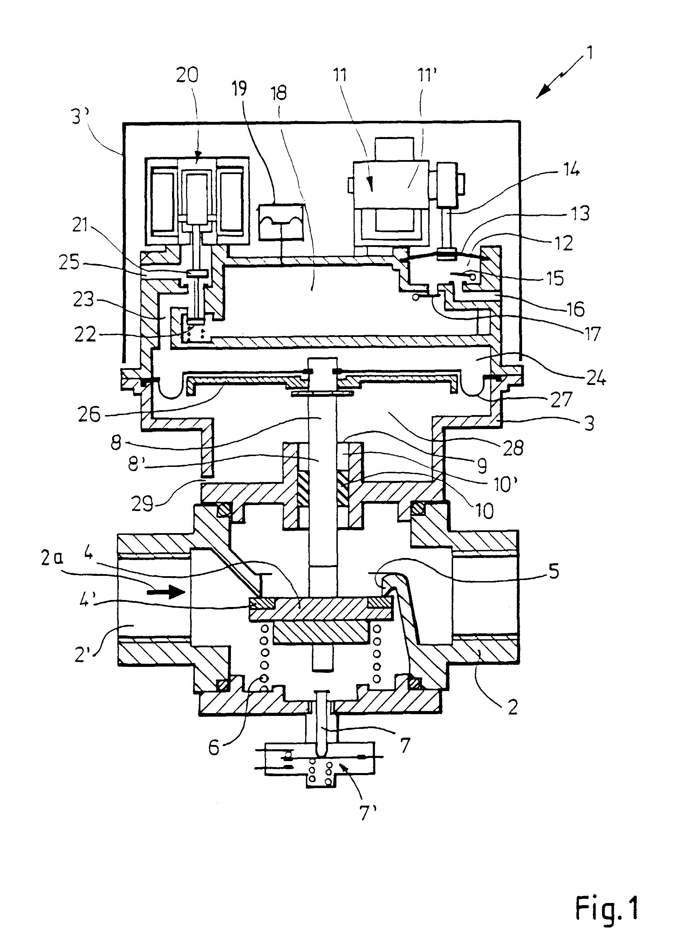

Das in der Fig. 1 mit 1 bezeichnete Sicherheitsventil ist aus einem Ventilgehäuse 2 und einem Steuerungsgehäuse 3 aufgebaut.

Im Ventilgehäuse 2 wird ein Strömungskanal 2' in Durchflußrichtung 2a für ein Fluid mittels eines Ventiltellers 4 geöffnet oder verschlossen. In der den Strömungskanal 2' verschließenden, in der Figur gezeigten Stellung des Ventiltellers 4 liegt dieser mittels eines auf seiner Oberseite ausgebildeten elastichen Dichtmittels 4' auf einem Ventilsitz 5 auf. Der Ventilteller 4 ist mit einer in seine Schließstellung wirkenden Schließfeder 6 beaufschlagt. Die völlige Offenstellung des Ventiltellers 4 wird von einem Taster 7 mechanisch festgestellt, der seinerseits einen elektrischen Schaltvorgang in einem Schalter 7' auslöst.

Der Ventilteller 4 ist mit einem Steuerkolben 8 verbunden, dessen Kolbenstange 8' durch eine Gehäuseöffnung 9 aus dem Ventilgehäuse 2 in das Steuerungsgehäuse 3 herausgeführt ist. Ein in der Öffnung 9 um den Steuerkolben 8 herum angeordneter Dichtring 10 dichtet dabei die Kolbenstange 8' bei ihrer Hubbewegung und somit auch das Ventilgehäuse 2 und das Steuerungsgehäuse 3 gegeneinander ab. Die Öffnung 9 ist zu beiden Seiten mit Führungen 10' für die Kolbenstange 8' abgeschlossen.

Auf der Oberseite des Steuerungsgehäuses 3 ist eine Membranpumpe 11 angeordnet, deren Druckraum 12 in das Steuerungsgehäuse 3 eingelassen und nach oben durch eine Pumpmembran 13 verschlossen ist. Über einen von dem Pumpenmotor 11' angetriebenen Pleuel 14 wird die Pumpmembran 13 in eine periodische Auf- und Abbewegung versetzt. An der Unterseite des Druckraumes 12 ist ein erstes Klappenventil 15 angeordnet, das einen nach außen führenden Luftansaugkanal 16 öffnet bzw. verschließt. Über ein zweites Klappenventil 17 kann der Druckraum 12 der Membranpumpe 11 mit einem Druckbehälter 18 verbunden werden.

Bei geschlossenem Klappenventil 17 und bei geöffnetem Klappenventil 15 saugt die Membranpumpe 11 in einem ersten Arbeitsschritt über den Luftansaugkanal 16 Umgebungsluft an, indem die Pumpmembran 13 in ihre obere Endstellung bewegt und somit durch Volumenexpansion des Druckraumes 12 ein Unterdruck gegenüber der Umgebungsatmosphäre erzeugt wird. In einem zweiten Arbeitsschritt wird bei geschlossenem Klappenventil 15 und geöffnetem Klappenventil 17 ein Teil der angesaugten Umgebungsluft aus dem Druckraum 12 in den Druckbehälter 18 komprimiert, indem durch die in ihre untere Endstellung bewegte Pumpmembran 13 das Volumen des Druckraumes 12 verringert wird. Das Klappenventil 17 wird geschlossen, und der Ansaugvorgang beginnt von neuem. Der Druck im Druckbehälter 18 wird von einem Drucksensor 19 erfaßt, der die Membranpumpe 11 bei Erreichen eines vorbestimmten Arbeitsdruckes im Druckbehälter 18 ausschaltet.

Ebenfalls auf der Oberseite des Steuerungsgehäuses 3 ist ein 3/2-Magnetventil 20 mit zwei Ventiltellern 21, 22 angeordnet, wobei eine Abdeckkappe 3' auf dem Steuerungsgehäuse 3 des Sicherheitsventils 1 sowohl die Membranpumpe 11 als auch das Magnetventil 20 abdeckt. Über den unteren Ventilteller 22 ist ein Überströmkanal 23 verschließbar, der den Druckbehälter 18 mit einem Arbeitsraum 24 verbindet. In der in der Figur gezeigten Schließstellung des zweiten Ventiltellers 22 ist der Arbeitsraum 24 über eine Ausblaseöffnung 25 mit der Umgebungsatmosphäre verbunden. Wird der Überströmkanal 23 von dem zweiten Ventilteller 22 freigegeben, so ist die Ausblaseöffnung 25 von dem ersten Ventilteller 21 verschlossen.

Eine sich von der Kolbenstange 8' radial auf der Oberseite des Kolbentellers 26 nach außen bis zum Steuerungsgehäuse 3 erstreckende Dichtungsmembran 27 teilt den Hubraum des Kolbens 8, 8' in den Arbeitsraum 24 und den Stauraum 28 und dichtet diese gegeneinander ab. Die Dichtungsmembran 27 ist auf ihrem Abschnitt zwischen Kolbenteller 26 und Steuerungsgehäuse 3 derart ausgebildet, daß sie die Hubwege des Kolbens 8 ebenfalls durchführen kann. Der Hub des Kolbens 8 entspricht dem Stellweg des Ventiltellers 4 zwischen seiner geschlossenen und seiner völlig geöffneten Stellung. Über eine Atmungsöffnung 29 im Steuerungsgehäuse 3 ist der Stauraum 28 mit der Umgebungsatmosphäre verbunden.

Im folgenden wird die Arbeitsweise des in Fig. 1 gezeigten erfindungsgemäßen Sicherheitsventils beschrieben.

Während des Betriebes der Membranpumpe 11 ist der aus dem Druckbehälter 18 herausführende Überströmkanal 23 durch den Ventilteller 22 des 3/2-Magnetventils 20 verschlossen. Soll der Strömungskanal 2' im Ventilgehäuse 2 freigegeben werden, so wird das 3/2-Magnetventil 20 aktiviert, wodurch der Überströmkanal 23 geöffnet und gleichzeitig die Ausblaseöffnung 25 verschlossen wird. Aufgrund des im Druckbehälter 18 mittels der Membranpumpe 11 aufgebauten Druckes strömt die Luft aus dem Druckbehälter 18 über den Überströmkanal 23 in den Arbeitsraum 24, wo sie auf die Oberseite des Kolbenstellers 26 einwirkt und Expansionsarbeit leistet. Über den Kolbenteller 26 wird die Kolbenstange 8' nach unten gedrückt, wodurch der Ventilteller 4 gegen die Kraft der Schließfeder 6 in seine Offenstellung geschoben wird. Durch den im Druckbehälter 18 vom Drucksensor 19 gemessenen Druckabfall ist die Membranpumpe 11 zwar wieder angelaufen, jedoch hat ihre Förderleistung nichts mehr zur Öffnungsenergie beigetragen. Nach Erreichen des am Drucksensor eingestellten Druckes schaltet der Kompressor aus.

Bei völlig geöffnetem Ventilteller 4 wird über den Taster 7 der Schalter 7' umgeschaltet, wofür ein Hubweg von etwa 1 mm angesetzt ist. Der Taster 7 übernimmt die Lagesteuerung des Ventiltellers 4, denn sobald der Taster 7 verlassen wird, weil beispielsweise durch Leckage ein Druckabfall im Arbeitsraum 24 stattgefunden hat, wird die Membranpumpe 11 eingeschaltet, die auf oben beschriebene Weise den Ventilteller 4 wieder in seine völlige Offenstellung bewegt.

Soll das Sicherheitsventil 1 den Strömungskanal 2' verschließen, so wird die Stromzufuhr des 3/2-Magnetventils 20 unterbrochen, so daß dieses in seine in der Figur dargestellte Stellung umschaltet. Der Arbeitsraum 24 ist über die Ausblaseöffnung 25 mit der Atmosphäre verbunden, so daß der im Arbeitsraum 24 wirkende Druck abgebaut wird. Der Öffnungsquerschnitt der Ausblaseöffnung 25 bzw. der Überströmkanal 23 ist dabei so dimensioniert, daß der Druck im Arbeitsraum 24 innerhalb weniger Zehntelsekunden so weit reduziert ist, daß die ausreichend dimensionierte Schließfeder 6 den Ventilteller 4 schließt, bevor der Druck im Arbeitsraum 24 den Atmosphärendruck erreicht hat. In Druckbehälter 18 bleibt der Kompressorluftdruck erhalten, so daß das Ventil nach Umsteuern des Magnetventils 20 sofort wieder geöffnet werden kann.

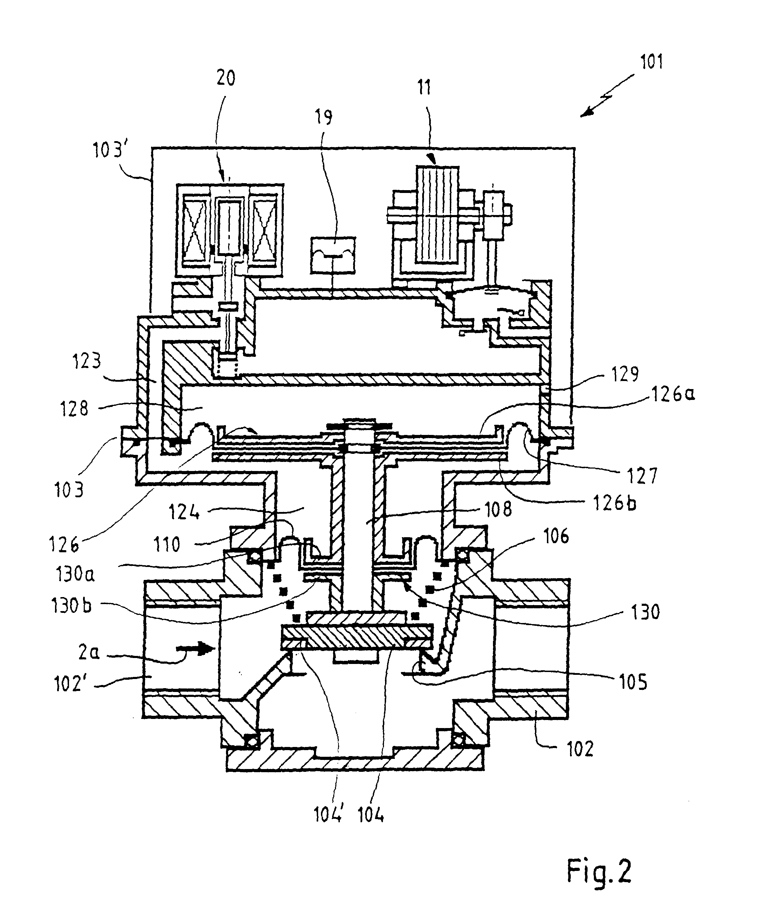

In Fig. 2 ist eine zweite Ausführungsform des erfindungsgemäßen Sicherheitsventils gezeigt, wobei die Bezugziffern für gleiche, bereits in Bezug auf Fig. 1 beschriebene Teile weggelassen sind.

Das in Fig. 2 gezeigte Sicherheitsventil 101 unterscheidet sich von dem in Fig. 1 gezeigten Sicherheitsventil 1 durch einen in seine geschlossene Stellung nach unten mit einer Schließfeder 106 beaufschlagten Ventilteller 104. In der geschlossenen Stellung des Ventiltellers 104 liegen die Dichtmittel 104' des Ventiltellers 104 auf dem Ventilsitz 105 des Ventilgehäuses 102 auf. Um einem Fluid in Durchflußrichtung 2a den Durchfluß durch das Ventilgehäuse 102 zu ermöglichen, ist der Ventilteller 104 nach oben in seine Offenstellung zu bewegen.

Der Druckbehälter 18 des Steuergehäuses 103 ist über einen Überströmkanal 123 mit einem Arbeitsraum 124 verbunden, der zwischen einem oberen Kolbenteller 126 und einem unteren Kolbenteller 130 eines mit dem Ventilteller 104 verbundenen Kolbens 108 angeordnet ist. Die beiden Kolbenteller 126, 130 sind jeweils durch zwei gering beabstandete Tellerplatten 126a und 126b bzw. 130a und 130b gebildet. Durch eine zwischen den beiden Tellerplatten 126a,b liegende und sich von der Kolbenstange 108 nach außen erstreckende Dichtungsmembran 127 ist oberhalb des Ventiltellers 126 ein Stauraum 128 ausgebildet. Der Stauraum 128 ist über eine Atmungsöffnung 129 mit der Umgebungsatmosphäre verbunden, so daß sich ein im Stauraum aufgebauter Überdruck über die Atmungsöffnung 129 abbaut. Der Arbeitsraum 124 ist nach unten durch eine zwischen den beiden Tellerplatten 130a,b liegende und sich von der Kolbenstange 108 nach außen erstreckende Dichtungsmembran 110 gegenüber dem Ventilgehäuse 102 abgedichtet.

Die Angriffsfläche der unteren Tellerplatte 126b des oberen Kolbentellers 126, auf die die im Arbeitsraum 118 unter Druck stehende Luft wirkt, ist sehr viel größer als die Angriffsfläche der oberen Tellerplatte 130a des unteren Kolbentellers 130, so daß sich bei einem Druck im Arbeitsraum 124 eine nach oben weisende resultierende Kraftkomponente ergibt. Wenn diese Kraft ausreicht, über den Kolben 108 den Ventilteller 104 gegen die Kraft der Schließfeder 106 von seinem Ventilsitz 105 abzuheben, öffnet sich das Sicherheitsventil 101.

Wird die auf den Ventilteller 104 wirkende Eingangsdruckkraft durch eine gleich große, entgegenwirkende Kraft kompensiert, so braucht der Kolbenantrieb 108 lediglich die Kraft der Schließfeder 106 zuzüglich einem Kraftanteil, der für die Massenbeschleunigung zum schnellen Öffnen des Steuerventils 101 erforderlich ist. Die Schließfeder 106 ist bei Gassicherheitsventilen 1, 101 so zu bemessen, daß je nach Ventilklasse ein definierter Gegendruck - ohne anstehenden Eingangsdruck - mit nur kleiner Leckagemenge abgesperrt werden kann.

Bei einem Sicherheitsventil, das mittels eines Ventiltellers einen Strömungskanal öffnet bzw. verschließt, mit einem mit dem Ventilteller verbundenen Kolben, der zum Öffnen oder Schließen in Längsrichtung in einem Arbeitsraum mit Druckluft beaufschlagbar ist, ist ein die Druckluft erzeugender Kompressor, beispielsweise eine Membranpumpe, in dem Sicherheitsventil ausgebildet. Im Aufstellungsnahbereich des Sicherheitsventils ist keine Preßluft mit entsprechenden Anschlüssen und Leitungen erforderlich. Der Druckluftbedarf kann über die Wahl der Kompressorleistung individuell angepaßt werden.

## Patentansprüche

1. Ventil (1; 101), das mittels eines Ventiltellers (4; 104) einen Strömungskanal (2'; 102) öffnet bzw. verschließt, mit einem mit dem Ventilteller (4; 104) verbundenen Kolben (8; 108), der zum Öffnen des Ventils (1; 101) in Längsrichtung in einem Arbeitsraum (24; 124) mit Druckluft beaufschlagbar ist, wobei ein die Druckluft erzeugender Kompressor (11) in dem Ventil (1; 101) ausgebildet ist,
dadurch gekennzeichnet,
daß das Ventil (1; 101) als Sicherheitsventil ausgebildet ist, wobei die von dem Kompressor (11) erzeugte Druckluft in einem dem Arbeitsraum (24; 124) vorgeschalteten Druckbehälter (18) speicherbar und bei Bedarf abrufbar ist, daß ein den Druckbehälter (18) mit dem Arbeitsraum (24; 124) verbindender Überströmkanal (23; 123) mittels eines Magnetventils (20) in dessen erster Arbeitsstellung öffnenbar oder in dessen zweiter Arbeitsstellung verschließbar ist, wobei dem stromlosen Zustand des Magnetventils (20) seine zweite Arbeitsstellung zugeordnet ist, und daß der Überströmkanal (23; 123) in der zweiten Arbeitsstellung des Magnetventils (20) über eine Ausblaseöffnung (25) zur Umgebungsatmosphäre geöffnet ist.

2. Sicherheitsventil nach Anspruch 1, dadurch gekennzeichnet, daß der Kompressor (11) als Kleinstkompressor, vorzugsweise als eine Membranpumpe, ausgebildet ist.

3. Sicherheitsventil nach Anspruch 1 oder 2, dadurch gekennzeichnet, daß das Magnetventil (20) als 3/2-Magnetventil ausgebildet ist.

4. Sicherheitsventil nach einem der vorhergehenden Ansprüche, dadurch gekennzeichnet, daß der Kompressor (11) und das Magnetventil (20) auf der gleichen Seite des Sicherheitsventils (1; 101) angeordnet sind.

5. Sicherheitsventil nach einem der vorhergehenden Ansprüche, dadurch gekennzeichnet, daß der Kompressor (11) eine dem Druckbehälter (18) vorgeschaltete kleinere Druckkammer (12) aufweist, die über ein erstes Klappenventil (15) mit einem Luftansaugkanal (16) und über ein zweites Klappenventil (17) mit dem Druckbehälter (18) verbindbar ist.

6. Sicherheitsventil nach einem der vorhergehenden Ansprüche, dadurch gekennzeichnet, daß eine mit dem Kolben (8; 108) verbundene Dichtungsmembran (27; 127) den Hubraum (24, 28; 124, 128) des Kolbens (8; 108) in den Arbeitsraum (24; 124) und einen Stauraum (28; 128) abdichtend unterteilt.

7. Sicherheitsventil nach einem der vorhergehenden Ansprüche, dadurch gekennzeichnet, daß der dem Arbeitsraum (24;124) gegenüberliegende Stauraum (28; 128) über eine Atmungsöffnung (29; 129) mit der Umgebungsatmosphäre verbunden ist.

8. Sicherheitsventil nach einem der vorhergehenden Ansprüche, dadurch gekennzeichnet, daß im Druckbehälter (18) ein den Betrieb des Kompressors (11) regelnder Druckmeßfühler (19) angeordnet ist.

9. Sicherheitsventil nach einem der vorhergehenden Ansprüche, dadurch gekennzeichnet, daß der Ventilteller (4; 104) mit einer in seine Schließrichtung wirkenden Schließfeder (6; 106) beaufschlagt ist.

10. Sicherheitsventil nach einem der vorhergehenden Ansprüche, dadurch gekennzeichnet, daß im Bereich des Ventiltellers (4; 104) ein dessen Stellweg messender Meßfühler (7) angeordnet ist.

11. Sicherheitsventil nach Anspruch 10, dadurch gekennzeichnet, daß der Meßfühler (7) als ein die völlige Offenstellung des Ventiltellers (4; 104) feststellender Endkontakt ausgebildet ist.

## Claims

1. Valve (1; 101) which opens or closes a flow channel (2'; 102) via a valve head (4; 104), with a piston (8; 108) connected to the valve head (4; 104) which can be subjected to pressurized air to open the valve (1; 101) in a longitudinal direction in a working volume (24; 124), wherein a compressor (11) generating the pressurized air is configured in the valve (1; 101), characterized in that
the valve (1; 101) is configured as a safety valve, wherein the pressurized air produced by the compressor (11) can be stored in a pressure container (18) upstream of the working volume (24; 124) and accessed when needed,
an overflow channel (23, 123) connecting the pressure container (18) to the working volume (24; 124) can be opened by means of a magnetic valve (20) in its first working position or closed in its second working position, wherein the second working position of the magnetic valve (20) is associated with its non-flowing state, and that the overflow channel (23; 123) is opened to surrounding atmosphere via an exhaust opening (25) in the second working position of the magnetic valve (20).

2. Safety valve according to claim 1, characterized in that the compressor (11) is configured as a small compressor, preferentially as a membrane pump.

3. Safety valve according to claim 1 or 2, characterized in that the magnetic valve (20) is configured as a 3/2-function magnetic valve.

4. Safety valve according to one of the preceding claims, characterized in that the compressor (11) and the magnetic valve (20) are arranged on the same side of the safety valve (1, 101).

5. Safety valve according to one of the preceding claims, characterized in that the compressor (11) exhibits a smaller pressure chamber (12) upstream of the pressure container (18) which can be connected to an air intake channel (16) via a first flap valve (15) and to the pressure container (18) via a second flap valve (17).

6. Safety valve according to one of the preceding claims, characterized in that a sealing membrane (27, 127) connected to the piston (8; 108) subdivides the stroke volume (24, 28; 124, 128) of the piston (8; 108) into the working volume (24; 124) and a retaining volume (28, 128) in a sealing fashion.

7. Safety valve according to one of the preceding claims, characterized in that the retaining volume (28; 128), which is opposite to the working volume (24; 124), is connected to the surrounding atmosphere via a breathing opening (29; 129).

8. Safety valve according to one of the preceding claims, characterized in that a pressure sensor (19) is arranged in the pressure container (18) to regulate the operation of the compressor (11).

9. Safety valve according to one of the preceding claims, characterized in that the valve head (4; 104) is engaged by a closing spring (6; 106) acting in its closing direction.

10. Safety valve according to one of the preceding claims, characterized in that a measuring sensor (7) is arranged in the vicinity of the valve head (4; 104) to measure its regulating distance.

11. Safety valve according to claim 10, characterized in that the measuring sensor (7) is configured as an end contact to determine the fully open position of the valve head (4; 104).

## Revendications

1. Soupape (1; 101), qui ouvre ou ferme un canal d'écoulement (2'; 102) au moyen d'une tête de soupape (4; 104), comprenant un piston (8; 108) qui est relié à la tête de soupape (4, 104) et qui peut être sollicité par de l'air sous pression en direction longitudinale dans un compartiment de travail (24; 124) pour l'ouverture de la soupape (1; 101), un compresseur (11) produisant l'air sous pression étant réalisé dans la soupape (1; 101),
caractérisé en ce que la soupape (1; 101) est réalisée sous la forme d'une soupape de sécurité, l'air sous pression produit par le compresseur (11) pouvant être accumulé dans un réservoir sous pression (18) monté en amont du compartiment de travail (24; 124) et en être prélevé en cas de besoin, en ce qu'un canal de trop-plein (23; 123) mettant le réservoir sous pression (18) en communication avec le compartiment de travail (24; 124) peut être, au moyen d'une vanne magnétique (20), ouvert dans sa première position de travail ou fermé dans sa deuxième position de travail, sa deuxième position de travail étant attribuée à l'état sans courant de la vanne magnétique (20), et en ce que le canal de trop-plein (23; 123) est, dans la deuxième position de travail de la vanne magnétique (20), ouvert à l'atmosphère environnante par une ouverture de purge (25).

2. Soupape de sécurité suivant la revendication 1, caractérisée en ce que le compresseur (11) est réalisé sous la forme d'un compresseur miniature, de préférence sous la forme d'une pompe à membrane.

3. Soupape de sécurité suivant l'une des revendications 1 et 2, caractérisée en ce que la vanne magnétique (20) est réalisée sous la forme d'une vanne magnétique 3/2.

4. Soupape de sécurité suivant l'une des revendications précédentes, caractérisée en ce que le compresseur (11) et la vanne magnétique (20) sont agencés du même côté de la soupape de sécurité (1; 101).

5. Soupape de sécurité suivant l'une des revendications précédentes, caractérisée en ce que le compresseur (11) présente un compartiment de pression (12) plus petit qui est monté en amont du réservoir sous pression (18) et qui, par l'intermédiaire d'un premier clapet (15), peut communiquer avec un canal d'aspiration d'air (16) et, par l'intermédiaire d'un deuxième clapet (17), avec le réservoir sous pression (18).

6. Soupape de sécurité suivant l'une des revendications précédentes, caractérisée en ce qu'une membrane d'étanchéité (27; 127) reliée au piston (8; 108) subdivise de manière étanche la chambre (24, 28; 124, 128) où le piston (8; 108) effectue sa course en le compartiment de travail (24; 124) et un compartiment de retenue (28; 128).

7. Soupape de sécurité suivant l'une des revendications précédentes, caractérisée en ce que le compartiment de retenue (28; 128) situé en face du compartiment de travail (24; 124) est, par l'intermédiaire d'une ouverture de respiration (29; 129), en communication avec l'atmosphère environnante.

8. Soupape de sécurité suivant l'une des revendications précédentes, caractérisée en ce qu'un détecteur de pression (19) réglant le fonctionnement du compresseur (11) est agencé dans le réservoir sous pression (18).

9. Soupape de sécurité suivant l'une des revendications précédentes, caractérisée en ce que la tête de soupape (4; 104) est sollicitée par un ressort de fermeture (6; 106) agissant dans son sens de fermeture.

10. Soupape de sécurité suivant l'une des revendications précédentes, caractérisée en ce qu'un détecteur (7) mesurant le trajet de réglage de la tête de soupape (4; 104) est agencé dans la zone de celle-ci.

11. Soupape de sécurité suivant la revendication 10, caractérisée en ce que le détecteur (7) est réalisé sous la forme d'un contact de fin de course fixant la position totalement ouverte de la tête de soupape (4; 104).
